# EUROPEAN PATENT SPECIFICATION

(11) **EP 2 186 286 B1**
(45) Date of publication and mention of the grant of the patent: **12.01.2011**
(21) Application number: 07802570.7
(22) Date of filing: 10.08.2007
(51) Int. Cl.: H04L 29/06

(54) **IMPROVEMENTS IN OR RELATING TO MONITORING IN AN INTERNET PROTOCOL (IP) DOMAIN**
VERBESSERUNGEN IN BEZUG AUF DIE ÜBERWACHUNG IN EINER DOMÄNE DES INTERNET-PROTOKOLLS (IP)
AMÉLIORATIONS DANS OU RELATIVES À LA SURVEILLANCE DANS UN DOMAINE DE PROTOCOLE INTERNET (IP)

(43) Date of publication of application: 19.05.2010
(73) Proprietor: Telefonaktiebolaget LM Ericsson (publ), 164 83 Stockholm (SE)
(72) Inventor: WITZEL, Andreas, 52134 Herzogenrath (DE); RANKE, Karl-Peter, 52134 Herzogenrath (DE)
(74) Representative: Pfeifer, Torsten
(86) International application number: PCT/EP2007/058318
(87) International publication number: WO 2009/021546

(56) References cited:
- WO-A-2004/091250
- WO-A-2007/006237
- US-A1- 2003 190 032
- "Lawful Interception (LI); Concepts of Interception in a Generic Network Architecture; ETSI TR 101 943" ETSI STANDARDS, LIS, SOPHIA ANTIPOLIS CEDEX, FRANCE, vol. SEC-LI, no. V2.2.1, 1 November 2006 (2006-11-01), XP014039695 ISSN: 0000-0001
- "Telecommunications and Internet Protocol Harmonization Over Networks (TIPHON); Requirements Definition Study; Studies into the Impact of lawful interception; ETSI TR 101 750" ETSI STANDARDS, LIS, SOPHIA ANTIPOLIS CEDEX, FRANCE, vol. TIPHON-8, no. V1.1.2, 1 January 2002 (2002-01-01), XP014004973 ISSN: 0000-0001

## Description

### Technical field

This invention relates to improvements in or relating to monitoring or lawful interception in an Internet protocol (IP) domain, particularly but not exclusively in relation to multimedia calls such as, for example, video calls.

### Background

Mobile networks are currently evolving from pure circuit switched (CS) networks towards Internet protocol (IP) based networks. This has resulted in evolution steps equivalent to that of the wireline networks in that Voice over IP (VoIP) via digital subscriber line (DSL) or wide local area network (WLAN) access is being realized. The mobile operators that install an IP multimedia subsystem (IMS) network and offer IMS services have a need for interworking between the CS domain and the IMS domain. This is required for all types of traffic, including video calls, multimedia telephony calls and the like.

There are a number of problems which exist in respect of CS-IMS interworking of video calls. One of these is the need for monitoring (also known as legal or lawful interception) of video calls. The monitoring will be required to be carried out in a Mobile Soft Switch (MSS), for example. However, this is not simple due to the fact that monitoring is not typically done in an interworking node, but instead in a node in the CS domain, the IMS domain or both. In addition, the media gateway control function (MGCF) will be integrated into the MSS and as such monitoring (lawful interception) will need to take this into account.

Video calls in the CS domain (CS video calls) have been handled as if they were pure data calls. As such the video support has not been a complex issue as the CS data channel has contained audio, video and control information in a multiplexed manner. In order to interwork the CS data channel (including video) with IMS it is necessary to interwork each of the different components of the video call in the IMS domain, namely the video, audio and control information.

### Summary

An object of the present invention is to provide a method and apparatus of monitoring video calls for lawful interception.

A still further object of the present invention is to provide a method and apparatus for enabling monitoring on a video call which has been derived from a specific communication protocol.

The present invention provides a method and system as described in the accompanying claims.

In accordance with one aspect of the present invention, there is provided a method of facilitating monitoring of a multimedia call made up of a plurality of component parts, to enable the multimedia call contents to be identified at a predetermined location, the multimedia call originating from a location at which a first communications protocol operates and passing through at least one location where a second communications protocol operates to a destination. The method comprises the steps of identifying the component parts of the multimedia call; - extracting one or more control signals from the component parts to form a call control signal for the multimedia call and a set of remaining component parts of the multimedia call; forming a multiplexed stream of the remaining component parts of the multimedia call; and independently transmitting the call control signal and the multiplexed stream to the predetermined location to enable the component parts of the multimedia call to be determined in order to identify multimedia call contents.

According to a second aspect of the present invention there is provided a module for a communication network for facilitating monitoring of a multimedia call made up of a plurality of component parts, to enable the multimedia call contents to be identified at a predetermined location, the multimedia call originating from a location at which a first communications protocol operates and passing through at least one location where a second communications protocol operates to a destination. The module comprising a signal processing module for extracting one or more control signals from the component parts to form a call control signal for the multimedia call and a set of remaining component parts of the multimedia call; a multiplexed module for forming a multiplexed stream from the remaining component parts of the multimedia call; independent transmission modules for transmitting each of the call control signal and the multiplexed stream to the predetermined location to enable the component parts of the multimedia call to be determined in order to identify multimedia call contents.

The module may be implemented on a single network node or distributed over several network nodes.

In an embodiment of the invention the call control signals forms a first type of communication and may be a printout communicated to the predetermined location as the multimedia call is set up. Also the multiplexed stream forms a second type of communication and may be a single UDI (Unrestricted Digital Information protocol) signal.

In an embodiment of the invention the multimedia call originates from an IP multimedia subsystem (IMS) network and passes through at least one location where a circuit switched (CS) protocol operates.

In an embodiment of the invention the call control signal may include: a multiplexing scheme, a coding scheme, or call parameters or any other relevant information.

In an embodiment of the invention this may be computer implemented.

In accordance with a still further aspect of the present invention there is provided method of monitoring, at a predetermined location, a multimedia call made up of a plurality of component parts which plurality of components have been separated into a call control signal and a multiplexed stream made up of a multiplex of remaining components which do not form part of the call control signal, the multimedia call originating from a location at which a first communications protocol operates and passing through at least one location where a second communications protocol operates to a destination. The method comprises the steps of receiving the call control signal and the multiplexed stream at the predetermined location; de-multiplexing the multiplexed stream based on a first component part in the call control signal; de-coding the remaining components based on a second component part in the call control signal; and recombining the remaining components to enable monitoring to the original multimedia call.

A further aspect of the present invention provides a lawful interception monitoring centre for monitoring a multimedia call made up of a plurality of component parts which plurality of components have been separated into a call control signal and a multiplexed stream made up of a multiplex of remaining components which do not form part of the call control signal, the multimedia call originating from a location at which a first communications protocol operates and passing through at least one location where a second communications protocol operates to a destination, the centre including: a receiver for receiving the call control signal and the multiplexed stream at the predetermined location; a de-multiplexing module for de-multiplexing the multiplexed stream based on a first component part in the call control signal; a decoding module for de-coding the remaining components based on a second component part in the call control signal; and a signal processing module for recombining the remaining components to enable monitoring to the original multimedia call.

There are a number of advantages provided by the various aspects of the present invention. One advantage is that the invention allows compliance with the existing lawful interception requirements by means of a simplified implementation which reduces the amount of information transmitted from one node to another. This is achieved by removing the control signaling and multiplexing the video and audio components into a multiplexed stream. The method and apparatus ensures that the media gateway control function (MGCF) logical functions can be combined with either the Mobile Switch Centre (MSC) or Gateway MSC (GMSC). The method and apparatus also allows legal interception to be carried out for MMTel calls using a CS node. Any changes made during the call to either the codec or multiplexing schemes can also be taken into consideration.

### Brief description of the drawings

Reference will now be made, by way of example, to the accompanying drawings, in which:
Figure 1 is a block diagram of the lawful intercept management system in accordance with 3GPP technology standards;
Figure 2 is a block diagram for illustrating monitoring of a video call, in accordance with an embodiment of the invention, by way of example; and
Figure 3 is a flow chart for illustrating the method steps for monitoring a video call, in accordance with an embodiment of the invention, by way of example.

### Detailed description

A CS video call consists of three main components. The first is a video channel characterized by the video codec. The second is an audio channel characterized by an audio codec. The third is the control channel (in accordance with the H.245 protocol) that provides control information in relation to the terminal capabilities and the opening and closing of channels. In addition, the control information defines the multiplexing scheme which is applied to multiplex the CS video call components into a single 64 kb per second UDI (Unrestricted Digital Information) CS data bearer.

If a video call takes place purely in the CS domain the existing prior art solutions for monitoring calls for lawful interception are perfectly adequate. However, as the increase in the Internet protocol "network" continues it is much more likely that the call, for example, will commence in the CS domain move into the IMS domain and then maybe back into the CS domain for termination. Any time a video call crosses over from one domain to another the present invention will provide the solution to dealing with the problem of lawful interception of calls that change domain. The example presented is in respect of the CS domain and the IMS domain; however, it will be appreciated that other communication protocols may make use of the same principles as the present invention, although they may be adapted from case to case.

In any interworking situation the signals that arrive at, for example, a Gateway Mobile Switching Centre (GMSC) where call forwarding is triggered in the GMSC, are from one protocol and are handled as if they were from another protocol. For example, the GMSC may receive an incoming Session initiation protocol (SIP) video call from the IMS domain which includes two real-time transport protocol (RTP) streams, one for video and one for audio, but may handle the call according to the CS data principles applicable to CS data calls. Clearly, this is not going to enable lawful interception of the SIP video call because there is no knowledge of the coding or multiplexing of the constituent signals.

Interworking is similarly a problem with Multimedia Telephony (MMtel) calls from one network or terminal to another via an IMS interface for each network or terminal, with traffic passing through the CS domain. Routing all MMtel calls through the CS domain to allow for lawful inception will work for speech calls, but will not work for video or other sorts of multimedia calls.

Lawful interception in the CS domain still requires the video content is in the 64 kb per second UDI format. However, the RTP streams of video and audio do not comply with this. In addition, the H.245 control signaling is not received at either side of the CS node and would be required at the monitoring centre in order to decode any possible UDI stream. In order to do this the control information would need to be generated in the CS node for any incoming video call just in case the call may require lawful interception at a later date. This would impact the capacity of the node and may result in a costly implementation. One of the most important requirements of lawful interception is that the interception process is not allowed to add information to the data streams. So adding the control signaling that is sent to the monitoring centre by the CS node would break an essential legal requirement.

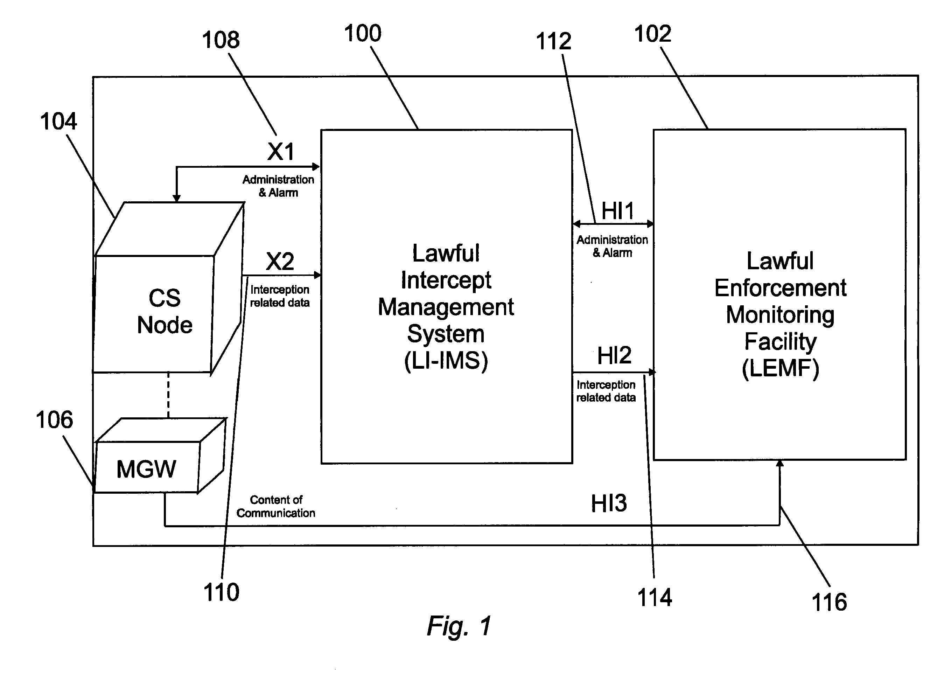

The defined requirements for lawful interception are shown in figure 1. A lawful interception management system (LI-IMS) 100 is connected to a law enforcement monitoring facility (LEMF) 102. A CS node 104 connected to a media gateway (MGW) 106 communicates with the LI-IMS. The communication between the CS node and the LI-IMS is in the form of a first set of signals relating to administration and alarm 108 and a second communication 110 relating to interception of related data. In turn the LI-IMS sends to the LEMF a first set of signals relating to administration and alarm 112 (this is often called the HI1 signal) and a second communication 114 (this is often called the HI2 signal) relating to interception of related data. If required the LEMF can obtain the content of a particular communication from the MGW 106 via route 116 (this is often called the HI3 signal). HI stands for handover interface in each of the above three examples.

As previously indicated above, for video or other multimedia calls that do not provide H.245 control signaling lawful interception from the CS node is not possible. However, the present invention provides the solution by multiplexing the audio and video RTP streams into a single UDI stream that does not include any control signaling. The control signaling, i.e. the information concerning the multiplexing scheme and codecs used in a monitored video call, are provided as additional information sent to the monitoring centre in a specific manner. For example the additional information may be sent as a printout that is faxed; communicated by computer means or in any other appropriate manner. The monitoring centre can then use the additional information to decode recorded call content at a later time. The additional information includes details of the multiplexing scheme, audio codec information and video codec information used for that call.

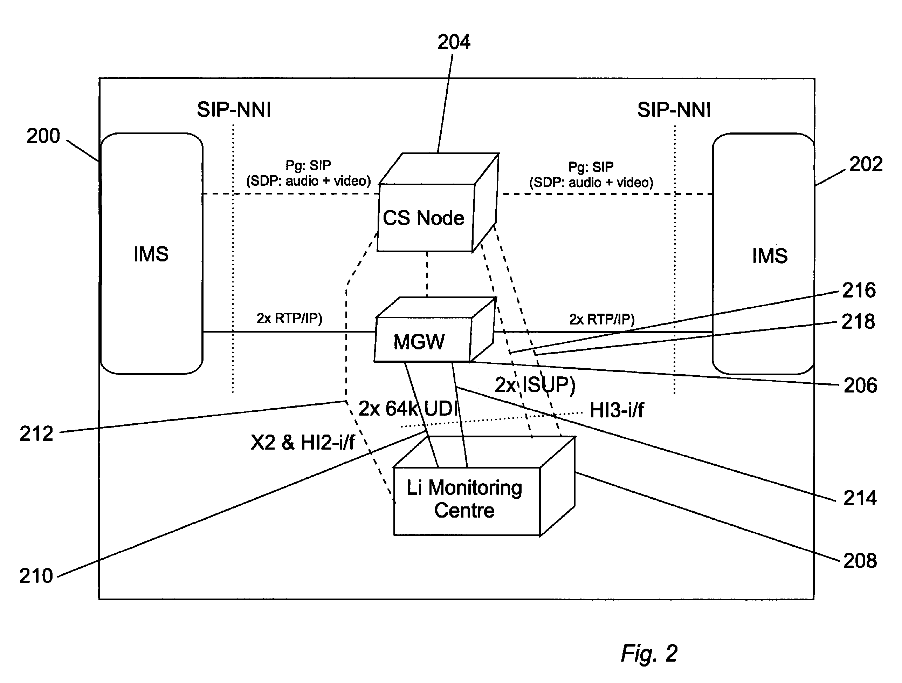

The method will now be described in greater detail with reference to figure 2. In accordance with lawful interception rules, the lawful interception process is not allowed to add any information to any call which is intercepted. The process of multiplexing does not add information to the call nor does it alter the call in any way. Referring to figure 2 a video call is made between. The call set up includes the exchange of SIP (session initiation protocol) signals and SDP (Session Description Protocol) information for media description between CS node 204 on hand and IMS 200 respectively IMS 202 on the other hand. The call is passed through CS node 204 and media gateway (MGW) 206. The MGW generates the data for lawful interception which is sent to the LI monitoring centre 208. The audio and video RTP streams from the originating side of the video call (IMS 200) are multiplexed into a single UDI stream 210 and forwarded to the monitoring centre. The CS node data, which includes details of the multiplexing scheme, audio codec information and video codec information used for that call, and which may be extracted from received SDP information or extracted in any other way, may be transmitted to the monitoring centre in a separate communication 212. As previously indicated the separate communication 212 may be made by any appropriate means.

Similarly, the video and audio RTP streams received from the terminating side of the video call (IMS 202) are multiplexed into another UDI stream 214 which is also forwarded to the monitoring centre. The CS node generates two CS UDI calls (216 and 218) towards the monitoring centre one for each direction. This operates using either BICC or ISUP signaling.

It should be noted that splitting the call into audio and video streams (which are then multiplexed) and a set of control signals may be used for the call between the originating and terminating side of the call as well as in any communications with the LI monitoring center. This has a number of advantages, as it can effectively reduce the bandwidth occupied by the component video call.

Whatever the destination of the multiplexed audio and video streams, they cannot be decoded without knowledge of what multiplexing scheme was applied and what codecs were used for the original audio and video coding. Accordingly, at the terminating end of the call or at the LI-monitoring centre it is necessary to know the following information:
t he audio codec;
t he video codec; and
t he manner in which the audio and video are multiplexed into information units (i.e. whether these are singular or spread over multiple multiplexed information units).

The combined information (the call control signal) mentioned above constitutes part of the content of the multimedia call, in this case a video call. It will be appreciated that for other types of multimedia call the call control signal and the other content of the call may comprise different elements, depending on the nature of the multimedia call.

The control information must be provided in addition to the UDI data streams containing video and audio. There are a number of options as to how the codec information can be communicated. The first option is in accordance with figure 2, where the information is added to the ISUP/BICC control signaling and communicated therewith. This will require changes to the ISUP/BICC protocol to be effective. In addition as the video and audio codecs may change during the ongoing video call the information will need to be updated if any changes to the codec occur.

In a second option the information required to decode the audio and video UDI stream is communicated by other means. For example, at video call setup a data printout is sent to the monitoring centre to identify the multiplexing and coding schemes used to the call. This may be in the form of a list; a database entry or identifier; or whatever which identifies the call, the time of the call, the codecs used etc. The interface for providing this information, is already defined and used in 3GPP under the name HI2 as indicated above. If there are any changes of the codec for the video or audio during the duration of the call another printout is sent to the monitoring centre at the time of the call. The second printout contains, at least, the new codec type and a timestamp indicating the point in time at which the change was made.

In relation to the communication of the multiplexing scheme there are also a number of options. A first option is that the multiplexing scheme is simply added to the data printout sent to the monitoring centre. If there are any changes to the multiplexing scheme during the duration of the call the second printout is generated for transmission to the monitoring centre.

A second option requires that the multiplexing schemes are predefined by agreement between the network operator and the authorities running the monitoring centre. This agreement would define the multiplexing scheme for each audio and video codec type and any combination thereof.

The combination of options used for determining and transmitting the information relating to coding and multiplexing will depend on whether the call is going to a call destination or to a lawful interception monitoring centre. In either case where real-time de-multiplexing and decoding are required the options that provide control signaling directly to a destination will be the preferred options. In the monitoring centre however, it is not always necessary to decode and de-multiplex the streams either in real time of otherwise, however when decoding and de-multiplexing are required, these may be delayed to a later time if necessary. Accordingly, the monitoring centre stores the entire contents of the call (i.e. the full stream received from both sides of the call). If and when the call needs to be the multiplexed or decoded, the additional data received from the CS node is correlated with the recorded streams to first de-multiplex the streams into the original coded audio and video streams. Then once the video and audio streams have been identified, those can be extracted by decoding using the appropriate decoder. Clearly, if either multiplexing scheme or coding scheme has changed during the call, appropriate changes will need to be made at the point of de-multiplexing and decoding the stored information at the monitoring centre.

There are a number of advantages to the present invention. Firstly the invention allows compliance with the existing lawful interception requirements by means of a simplified implementation which reduces the amount of information transmitted from one node to another. This is achieved by removing the control signaling and multiplexing the video and audio components into a multiplexed stream. The method and apparatus ensures that the media gateway control function (MGCF) logical functions can be combined with either the Mobile Switching Centre (MSC) or Gateway MSC (GMSC). The method and apparatus also allows legal interception to be carried out for MMTel calls using a CS node. Any changes made during the call to either the codec or multiplexing schemes can be taken into consideration.

In the present invention a multiplex of audio and video signals is formed and the control information is extracted in order to reduce the load and provide a manageable stream which can be stored using less memory capacity. In addition, where appropriate the invention provides a real-time means to transmit the information relating to the video call. The multiplex of audio and video signals without control information, is of a lower bandwidth than the video call were it not multiplexed or without control information. This clearly has a number of advantages. Similarly, providing information for de-multiplexing and decoding the RTP received stream requires a number of solutions to problems, as have been presented herein.

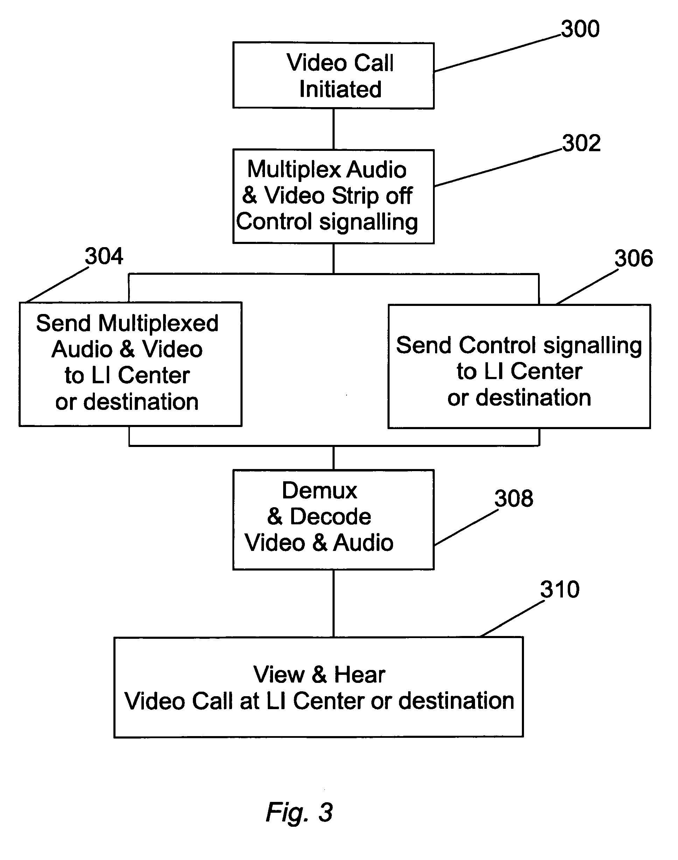

Referring to figure 3, the method steps of the present invention are now presented. A video call is initiated at step 300. The audio and video streams are multiplexed into a single multiplexed stream and the control signaling is extracted at step 302. This can take place at any appropriate point in the transmission channel from the originating to terminating end of the video call, but is generally at a CS node in the CS domain. The multiplexed audio and video stream are then sent to the lawful interception monitoring centre or to the destination (as is required), step 304. In a separate process the control information or signaling is sent to the lawful interception monitoring centre or the destination in step 306. At a certain point in time in the future (real-time for the destination and any time for the lawful interception monitoring centre) the audio and video components are demultiplexed and decoded (step 308) based on the control information or signaling sent at step 306. At step 310 and video call can be viewed and heard either at the lawful interception monitoring centre or the destination (as the case may be).

In order to carry out the method steps identified in figure 3 a number of modules for carrying out the steps may be found in for example the CS node and the MGW in figure 2. The modules include a multiplexing module for multiplexing the audio and video streams prior to them being transmitted to the lawful interception monitoring centre. In addition, signal processing module for removing and processing the call control signals in order for them to be communicated to the lawful interception monitoring centre is also provided. At the lawful interception monitoring centre there are equivalent modules for receiving, de-multiplexing, decoding and processing the received signals and also for storing the call control signals and the multiplexed stream until such time as the signals need to be decoded (if ever).

In the embodiments described above, the emphasis has been on identifying the coding and multiplexing schemes of a particular multimedia call in order to enable the lawful interception to de-multiplex and decode the call. However, it will be appreciated, that other call parameters may be captured as the control information relating to the multimedia call to enable identification of the content of the multimedia call for the purposes of lawful interception.

It will be appreciated there are many alternatives to the embodiments described above, which would still fall within the scope of the present invention, as defined in the appended claims.

## Claims

1. A method of facilitating monitoring of a multimedia call made up of a plurality of component parts, to enable the multimedia call contents to be identified at a predetermined location, the multimedia call originating from an IP multimedia subsystem IMS network and passing through at least one location where a circuit switched CS protocol operates to a destination, the method comprising the steps of:
- identifying the component parts of the multimedia call;
- extracting one or more control signals from the component parts to form a call control signal for the multimedia call,
extracting a video and an audio real-time protocol stream as a set of remaining component parts of the multimedia call;
- forming a single Unrestricted Digital Information protocol UDI signal as a multiplexed stream of the remaining component parts of the multimedia call;
- independently transmitting the call control signal and the single UDI
signal to the predetermined location to enable the component parts of the multimedia call to be determined in order to identify multimedia call contents.

2. A method as claimed in claim 1, wherein the step of independently transmitting the call control signal and the multiplexed stream comprises transmitting the call control signals in a first type of communication.

3. A method as claimed in claim 2, further comprising transmitting the call control signal as a printout communicated to the predetermined location as the multimedia call is set up

4. A method as claimed in any preceding claim, wherein the step of independently transmitting the call control signals and the multiplexed stream comprises transmitting the multiplexed stream in a second type of communication.

5. A method as claimed in any preceding claim, further comprising providing information from a lists consisting of: a multiplexing scheme, a coding scheme, or call parameters, as the calls control signal.

6. A method as claimed in any preceding claim, further comprising transmitting the call control signal and the multiplexed stream to a lawful interception monitoring centre.

7. A module for a communication network for facilitating monitoring of a multimedia call made up of a plurality of component parts, to enable the multimedia call contents to be identified at a predetermined location, the multimedia call originating from an IP multimedia subsystem IMS and passing through at least one location where a circuit switched CS protocol operates to a destination, the module comprising:
- a signal processing module adapted to extract one or more control signals from the component parts to form a call control signal for the multimedia call and a video and an audio real-time protocol stream as a set of remaining component parts of the multimedia call;
- a multiplexed module adapted to form a single Unrestricted Digital Information protocol UDI
signal as a multiplexed stream from the remaining component parts of the multimedia call;
- independent transmission modules adapted to transmit each of the call control signal and the single UDI
signal to the predetermined location to enable the component parts of the multimedia call to be determined in order to identify multimedia call contents.

8. A module as claimed in claim 7, wherein the call control signals form a first type of communication.

9. A module as claimed in claim 8, wherein the first type of communication is a printout communicated to the predetermined location as the multimedia call is set up

10. A module as claimed in any of claims 7 to 9, wherein the multiplexed stream forms a second type of communication.

11. A module as claimed in any of claims 7 to 10, further comprising including information from a lists consisting of: a multiplexing scheme, a coding scheme, or call parameters, as the calls control signal.

12. A module as claimed in any of claims 7 to 11, further comprising transmitting the call control signal and the multiplexed stream to a lawful interception monitoring centre.

13. A computer program comprising instructions for carrying out all the steps of the method according to any of claims 1 to 6, when said computer program is executed on a computer system.

## Patentansprüche

1. Verfahren zum Ermöglichen des Überwachens eines aus einer Mehrzahl von Bestandteilen bestehenden Multimedia-Rufs, um ein Identifizieren der Multimedia-Rufinhalte an einem vorbestimmten Ort zu ermöglichen, wobei der Multimedia-Ruf von einem IP-Multimedia-Subsystem- bzw. IMS-Netz abgeht und durch mindestens einen Ort, an dem ein leitungsvermitteltes bzw. CS-Protokoll funktioniert, zu einem Ziel durchläuft wird, wobei das Verfahren die folgenden Schritte umfasst:
- Identifizieren der Bestandteile des Multimedia-Rufs;
- Extrahieren eines oder mehrerer Steuersignale aus den Bestandteilen, um ein Rufsteuerungssignal für den Multimedia-Ruf zu bilden;
- Extrahieren eines Video- und eines Audio-Echtzeitprotokollstroms als einen Satz von restlichen Bestandteilen des Multimedia-Rufs;
- Bilden eines einzelnen Unrestricted Digital Information- oder UDI-Protokollsignals als einen Multiplexstrom der restlichen Bestandteile des Multimedia-Rufs;
- unabhängiges Senden des Rufsteuerungssignals und des einzelnen UDI-Signals an den vorbestimmten Ort, um zu ermöglichen, dass die Bestandteile des Multimedia-Rufs bestimmt werden, um Multimedia-Rufinhalte zu identifizieren.

2. Verfahren nach Anspruch 1, wobei der Schritt des unabhängigen Sendens des Rufsteuerungssignals und des Multiplexstroms ein Senden der Rufsteuerungssignale in einem ersten Typ von Kommunikation umfasst.

3. Verfahren nach Anspruch 2, ferner umfassend ein Senden des Rufsteuerungssignals als einen Ausdruck, der an den vorbestimmten Ort übertragen wird, wenn der Multimedia-Ruf aufgebaut wird.

4. Verfahren nach einem der vorhergehenden Ansprüche, wobei der Schritt des unabhängigen Sendens der Rufsteuerungssignale und des Multiplexstroms ein Senden des Multiplexstroms in einem zweiten Typ von Kommunikation umfasst.

5. Verfahren nach einem der vorhergehenden Ansprüche, ferner umfassend ein Bereitstellen von Informationen aus einer Liste bestehend aus einem Multiplexschema, einem Codierungsschema oder Rufparametern als die Rufsteuerungssignale.

6. Verfahren nach einem der vorhergehenden Ansprüche, ferner umfassend ein Senden des Rufsteuerungssignals und des Multiplexstroms an ein rechtmäßiges Abhörüberwachungszentrum.

7. Modul für ein Kommunikationsnetz zum Ermöglichen des Überwachens eines aus einer Mehrzahl von Bestandteilen bestehenden Multimedia-Rufs, um ein Identifizieren der Multimedia-Rufinhalte an einem vorbestimmten Ort zu ermöglichen, wobei der Multimedia-Ruf von einem IP-Multimedia-Subsystem- bzw. IMS-Netz abgeht und durch mindestens einen Ort, an dem ein leitungsvermitteltes bzw. CS-Protokoll funktioniert, zu einem Ziel durchläuft, wobei das Modul umfasst:
- ein Signalverarbeitungsmodul, das so ausgelegt ist, dass es ein oder mehrere Steuersignale aus den Bestandteilen zum Bilden eines Rufsteuerungssignals für den Multimedia-Ruf und einen Video- und einen Audio-Echtzeitprotokollstrom als einen Satz von restlichen Bestandteilen des Multimedia-Rufs extrahiert;
- ein Multiplexmodul, das so ausgelegt ist, dass es ein einzelnes Unrestricted Digital Information-oder UDI-Protokollsignal als einen Multiplexstrom von den restlichen Bestandteilen des Multimedia-Rufs bildet;
- unabhängige Sendemodule, die so ausgelegt sind, dass sie jedes des Rufsteuerungssignals und des einzelnen UDI-Signals an den vorbestimmten Ort senden, um zu ermöglichen, dass die Bestandteile des Multimedia-Rufs bestimmt werden, um Multimedia-Rufinhalte zu identifizieren.

8. Modul nach Anspruch 7, wobei die Rufsteuerungssignale einen ersten Typ von Kommunikation bilden.

9. Modul nach Anspruch 8, wobei der erste Typ von Kommunikation ein Ausdruck ist, der an den vorbestimmten Ort übertragen wird, wenn der Multimedia-Ruf aufgebaut wird.

10. Modul nach einem der Ansprüche 7 bis 9, wobei der Multiplexstrom einen zweiten Typ von Kommunikation bildet.

11. Modul nach einem der Ansprüche 7 bis 10, ferner umfassend ein Aufnehmen von Informationen aus einer Liste bestehend aus einem Multiplexschema, einem Codierungsschema oder Rufparametern als das Rufsteuerungssignal.

12. Modul nach einem der Ansprüche 7 bis 11, ferner umfassend ein Senden des Rufsteuerungssignals und des Multiplexstroms an ein rechtmäßiges Abhörüberwachungszentrum.

13. Computerprogramm, umfassend Anweisungen zum Ausführen aller Schritte des Verfahrens nach einem der Ansprüche 1 bis 6, wenn das Computerprogramm auf einem Computersystem ausgeführt wird.

## Revendications

1. Procédé pour faciliter la surveillance d'un appel multimédia constitué d'une pluralité de parties constituantes, afin d'activer les contenus d'appel multimédia à identifier à une position prédéterminée, l'appel multimédia émanant d'un réseau de sous-système multimédia IP, IMS, et passant à travers une position où un protocole de commutation de circuits, CS, fonctionne vers une destination, le procédé comprenant les étapes consistant à :
- identifier les parties constituantes de l'appel multimédia ;
- extraire un ou plusieurs signaux de commande des parties constituantes afin de former un signal de commande d'appel destiné à l'appel multimédia,
- extraire un flux de protocole en temps réel audio et vidéo comme un ensemble de parties constituantes restantes de l'appel multimédia ;
- former un signal de protocole UDI (Unrestricted Digital Information) individuel comme un flux multiplexé des parties constituantes restantes de l'appel multimédia ;
- transmettre indépendamment le signal de commande d'appel et le signal UDI individuel à la position prédéterminée afin de permettre aux parties constituantes de l'appel multimédia d'être déterminées de manière à identifier les contenus d'appel multimédia.

2. Procédé selon la revendication 1, dans lequel l'étape consistant à transmettre indépendamment le signal de commande d'appel et le flux multiplexé comprend de transmettre les signaux de commande d'appel dans un premier type de communication.

3. Procédé selon la revendication 2, comprenant en outre de transmettre le signal de commande d'appel comme un relevé imprimé communiqué à la position prédéterminée lorsque l'appel multimédia est établi.

4. Procédé selon une quelconque des revendications précédentes, dans lequel l'étape consistant à transmettre indépendamment les signaux de commande d'appel et le flux multiplexé comprend de transmettre le flux multiplexé dans un second type de communication.

5. Procédé selon une quelconque des revendications précédentes, comprenant en outre de fournir une information provenant d'une liste constituée de : un système de multiplexage, un système de codage ou des paramètres d'appel, en tant que signal de commande d'appel.

6. Procédé selon une quelconque des revendications précédentes, comprenant en outre de transmettre le signal de commande d'appel et le flux multiplexé à un centre de surveillance et d'interception licite.

7. Module destiné à un réseau de communication pour faciliter la surveillance d'un appel multimédia constitué d'une pluralité de parties constituantes, pour permettre aux contenus d'appel multimédia d'être identifiés à une position prédéterminée, l'appel multimédia émanant d'un sous-système multimédia IP, IMS, et passant à travers au moins une position où un protocole de commutation de circuits, CS, fonctionne vers une destination, le module comprenant :
- un module de traitement de signaux adapté afin d'extraire un ou plusieurs signaux de commande des parties constituantes afin de former un signal de commande d'appel pour l'appel multimédia et un flux de protocole en temps réel vidéo et audio comme un ensemble de parties constituantes restantes de l'appel multimédia ;
- un module multiplexé adapté afin de former un signal UDI (Unrestricted Digital Information) individuel comme un flux multiplexé à partir des parties constituantes restantes de l'appel multimédia ;
- des modules de transmission indépendants adaptés afin de transmettre chacun du signal de commande d'appel et du signal UDI individuel à la position prédéterminée afin de permettre aux parties constituantes de l'appel multimédia d'être déterminées de manière à identifier les contenus d'appel multimédia.

8. Module selon la revendication 7, dans lequel les signaux de commande d'appel forment un premier type de communication.

9. Module selon la revendication 8, dans lequel le premier type de communication est un relevé imprimé communiqué à la position prédéterminée lorsque l'appel multimédia est établi.

10. Module selon une quelconque des revendications 7 à 9, dans lequel le flux multiplexé forme un second type de communication.

11. Module selon une quelconque des revendications 7 à 10, comprenant en outre d'inclure une information provenant d'une liste constituée de : un système de multiplexage, un système de codage ou des paramètres d'appel, en tant que signal de commande d'appel.

12. Module selon une quelconque des revendications 7 à 11, comprenant en outre de transmettre le signal de commande d'appel et le flux multiplexé à un centre de surveillance d'interception licite.

13. Programme informatique comprenant des instructions pour mettre en oeuvre toutes les étapes du procédé selon une quelconque des revendications 1 à 6, quand ledit programme informatique est exécuté sur un système informatique.
